# EUROPEAN PATENT APPLICATION

(11) **EP 4 645 099 A1**
(43) Date of publication of application: **05.11.2025**
(21) Application number: 24220877.5
(22) Date of filing: 18.12.2024
(51) Int. Cl.: G06F 12/02, G06F 12/0868, G06F 12/0897

(54) **SYSTEMS AND METHODS FOR REDUCING LATENCY IN MEMORY TIERING**

(30) Priority: 30.04.2024 US 202463640879 P; 01.07.2024 US 202418761304
(71) Applicant: Samsung Electronics Co., Ltd., Suwon-si, Gyeonggi-do 16677 (KR)
(72) Inventor: GIM, Jongmin, San Jose, CA, 95134 (US); CHOI, Changho, San Jose, CA, 95134 (US); PARK, Heekwon, San Jose, CA, 95134 (US); JUNG, Jaemin, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Provided are systems (300), methods, and apparatuses for systems (300) and methods for reducing latency of memory tiering devices. In one or more examples, the systems (300), devices, and methods include determining a number of pages (335) in a first memory tier (330) satisfies a threshold; based on the number of pages (335) in the first memory tier (330) satisfying the threshold, obtaining from an access log (390) an access counter (394) and a first physical address (392) associated with a page (355) of a second memory tier (360); translating the first physical address (392) to a second physical address (380) associated with a host; and modifying, based on the access counter (394), a counter field of a first data structure (385).

## Description

### TECHNICAL FIELD

The disclosure relates generally to memory systems, and more particularly to systems and methods for reducing latency of memory tiering devices.

### BACKGROUND

The present background section is intended to provide context only, and the disclosure of any concept in this section does not constitute an admission that said concept is prior art.

Memory can refer to electronic components used by computers to store data and instructions that can be accessed by a processor. Memory allows a system to store and retrieve information for various computing tasks. Memory latency can include the time it takes for a processor to retrieve a byte or word of data from memory after a request is initiated. Memory latency can be a measure of how quickly a system's memory responds to a request, and can be measured in nanoseconds.

### SUMMARY

In various embodiments, the systems and methods described herein include systems, methods, and apparatuses for systems and methods for reducing latency of memory tiering devices (e.g., based on cache coherent and/or cache-based protocols such as compute express link (CXL)). In some aspects, the systems and methods described herein relate to a method of memory tiering including: determining a number of pages in a first memory tier satisfies a threshold; based on the number of pages in the first memory tier satisfying the threshold, obtaining from an access log an access counter and a first physical address associated with a page of a second memory tier; translating the first physical address to a second physical address associated with a host; and modifying, based on the access counter, a counter field of a first data structure.

In some aspects, the techniques described herein relate to a method, based on the number of pages in the first memory tier satisfying the threshold and based on modifying the counter field of the first data structure, further including selecting a page from the second memory tier to move to the first memory tier.

In some aspects, the techniques described herein relate to a method, based on the number of pages in the first memory tier satisfying the threshold and based on a counter field of a second data structure, further including selecting a page from the first memory tier to demote to the second memory tier, wherein the first data structure is associated with the second memory tier and the second data structure is associated with the first memory tier.

In some aspects, the techniques described herein relate to a method, further including reserving an allocation of the first memory tier for storage of the page of the second memory tier, wherein the first memory tier has a lower latency than the second memory tier.

In some aspects, the techniques described herein relate to a method, further including: migrating the page of the second memory tier to the allocation of the first memory tier; modifying a page mapping of the first memory tier based on migrating the page of the second memory tier to the allocation of the first memory tier; and making the page from the second memory tier available based on migrating the page of the second memory tier to the allocation of the first memory tier.

In some aspects, the techniques described herein relate to a method, wherein the counter field corresponds to a page table entry of the page of the second memory tier. In some aspects, the techniques described herein relate to a method, wherein the first data structure is associated with a cache-based protocol device driver. In some aspects, the techniques described herein relate to a method, wherein the access log is associated with a cache-based protocol device. In some aspects, the techniques described herein relate to a method, wherein the access counter and the first physical address are obtained via an interface to firmware of the cache-based protocol device.

In some aspects, the techniques described herein relate to a device including: at least one memory; and at least one processor coupled with the at least one memory configured to: determine a number of pages in a first memory tier satisfies a threshold; based on the number of pages in the first memory tier satisfying the threshold, obtain from an access log an access counter and a first physical address associated with a page of a second memory tier; translate the first physical address to a second physical address associated with a host; and modify, based on the access counter, a counter field of a first data structure.

In some aspects, the techniques described herein relate to a device, wherein the at least one processor is configured to select a page from the second memory tier to move to the first memory tier based on the number of pages in the first memory tier satisfying the threshold and based on modifying the counter field of the first data structure.

In some aspects, the techniques described herein relate to a device, wherein the at least one processor is configured to select, based on the number of pages in the first memory tier satisfying the threshold and based on a counter field of a second data structure, a page from the first memory tier to demote to the second memory tier, wherein the first data structure is associated with the second memory tier and the second data structure is associated with the first memory tier.

In some aspects, the techniques described herein relate to a device, wherein the at least one processor is configured to reserve an allocation of the first memory tier for storage of the page of the second memory tier, wherein the first memory tier has a lower latency than the second memory tier.

In some aspects, the techniques described herein relate to a device, wherein the at least one processor is configured to: migrate the page of the second memory tier to the allocation of the first memory tier; modify a page mapping of the first memory tier based on migrating the page of the second memory tier to the allocation of the first memory tier; and make the page from the second memory tier available based on migrating the page of the second memory tier to the allocation of the first memory tier.

In some aspects, the techniques described herein relate to a device, wherein: the access log is associated with a cache-based protocol device, and the access counter and the first physical address are obtained via an interface to firmware of the cache-based protocol device. In some aspects, the techniques described herein relate to a device, wherein the counter field corresponds to a page table entry of the page of the second memory tier. In some aspects, the techniques described herein relate to a device, wherein the first data structure is associated with a cache-based protocol device driver.

In some aspects, the techniques described herein relate to a non-transitory computer-readable medium storing code that includes instructions executable by a processor to: determine a number of pages in a first memory tier satisfies a threshold; based on the number of pages in the first memory tier satisfying the threshold, obtain from an access log an access counter and a first physical address associated with a page of a second memory tier; translate the first physical address to a second physical address associated with a host; and modify, based on the access counter, a counter field of a first data structure.

In some aspects, the techniques described herein relate to a non-transitory computer-readable medium, wherein the code includes further instructions executable by the processor to select a page from the second memory tier to move to the first memory tier based on the number of pages in the first memory tier satisfying the threshold and based on modifying the counter field of the first data structure.

In some aspects, the techniques described herein relate to a non-transitory computer-readable medium, wherein the code includes further instructions executable by the processor to select, based on the number of pages in the first memory tier satisfying the threshold and based on a counter field of a second data structure, a page from the first memory tier to demote to the second memory tier, wherein the first data structure is associated with the second memory tier and the second data structure is associated with the first memory tier.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described herein include multiple advantages and benefits. For example, based on the systems and methods, memory tiering systems avoid non-uniform memory access (NUMA) balancing scan. By avoiding NUMA balancing scan, the systems and methods increase performance by avoiding the page fault caused by NUMA balancing scan. Also, by avoiding NUMA balancing scan, the systems and methods preserve CPU resources by avoiding a scan of virtual memory areas (VMAs). Also, by avoiding NUMA balancing scan, the systems and methods increase the accuracy of the sequence of the newest accesses according to the scanning range. In some examples, the systems and methods provide reduced latency promotion (e.g., selecting a page from a second memory tier to move to a first memory tier) based on CXL capability hint. In the promotion phase, the systems and methods may provide a mechanism to avoid NUMA balancing scan and overheads associated with NUMA balancing scan (e.g., page fault overheads, page migration overheads). Thus, the system and methods enable a system that minimizes or eliminates issues with NUMA balancing scan (e.g., wasting CPU resources to scan VMAs) and associated overheads such as page fault overheads and page migration overheads that reduces system performance. Based on the systems and methods, multiple algorithms can be applied on kernel. The systems and methods improve efficiency for multiple CXL devices on a host.

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 depicts a flow diagram illustrating an example method associated with the disclosed systems, in accordance with example implementations described herein.
FIG. 5 depicts a flow diagram illustrating an example method associated with the disclosed systems, in accordance with example implementations described herein.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subj ect matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of' or "act of" in the Claims herein is not intended to invoke the provisions of 35 U.S.C. 112, Paragraph 6.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Any data processing may include data buffering, aligning incoming data from multiple communication lanes, forward error correction ("FEC"), and/or others. For example, data may be first received by an analog front end (AFE), which prepares the incoming for digital processing. The digital portion (e.g., DSPs) of the transceivers may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, system-on-a-chip, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

Some memory tiering systems may be based on non-uniform memory access (NUMA). NUMA can include a computer memory design used in multiprocessor systems. NUMA balancing may use one or more algorithms and/or data structures to move application data to memory closer to the processors that reference the application data. However, NUMA balancing scan requires a page fault, decreasing system performance. Also, NUMA balancing scan consumes CPU resources to scan virtual memory addresses, and NUMA balancing scan does not provide an accurate sequence of the newest accesses due to limitations of NUMA scanning.

Some aspects of the systems and methods described herein are based on memory tiering. Memory tiering can include dividing physical memory into two or more levels based on performance characteristics of each memory level and allocating data to different memory levels to balance system workload, cost, capacity, and performance. Tiered memory (e.g., from fastest to slowest) may include at least one of CPU registers, cache, high-bandwidth memory, main memory (e.g., DRAM, DDR memory), CXL memory, NVM memory, disaggregated memory, flash memory (e.g., SSD), disk drive memory (e.g., HDD), and the like.

Memory promotion can include transferring frequently accessed hot data from a lower speed memory to a higher speed memory (e.g., to high-speed DRAM memory). Memory demotion can include moving infrequently used cold data from a higher speed memory to a lower speed memory. In memory tiering, a victim page can be a data block in a level of memory that is replaced by another data block to make room for the new incoming data.

The systems and methods may be based on cache coherent and/or cache-based protocols. In some cases, cache coherent and/or cache-based protocols may include CXL (e.g., cache coherent and/or cache-based protocols implemented in CXL devices). A device driver (e.g., CXL device driver) may be configured to route traffic from a device to a host based on a logical device identifier (LD-ID). A CXL host may include a CPU (e.g., host processor). A CXL device may include an accelerator (e.g., GPU, ASIC, FPGA, smart network interface controller) and/or a memory device (e.g., persistent memory, computational storage). CXL devices can communicate with a host processor's DDR memory via CXL. Similarly, the host processor can communicate with memory of a CXL device (e.g., DDR, high-bandwidth memory) via CXL. Some CXL devices can include memory expansion devices that allow host processors to access CXL device memory cache coherently through cxl.mem transactions. In some cases, a host may communicate with a CXL device via a CXL mailbox (e.g., an interface to firmware of the CXL device).

Some memory tiering systems may be based on non-uniform memory access (NUMA). NUMA can include a computer memory design used in multiprocessor systems. With NUMA, different processors can have different access times to different physical memory areas or nodes. NUMA balancing may use one or more algorithms and/or data structures to move application data to memory closer to the processors that reference the application data. NUMA balancing can include periodic NUMA unmapping of process memory, NUMA hinting fault, Migrate-on-Fault (MoF), and task_numa_placement.

A NUMA hinting fault can occur when a task scanner marks memory to force a page fault, and then the next access to the data occurs. This fault can cause data to be moved to a memory node that is associated with the task that is accessing the memory. A NUMA hinting fault can include a page fault that occurs when a task scanner periodically unmaps a portion of a task's address space to force a page fault when the data is accessed. A kernel can use this NUMA hinting fault to determine whether a page is to be migrated. It is noted that, in some cases, a page size may be 512 to 8192 bytes. As an example, a page size of the systems and methods described herein may be 4096 bytes. When a page fault occurs, the kernel can use the CPU's location to determine if the page needs to be moved to the node that contains the CPU.

When a page is migrated from a first memory tier to a second memory tier, a victim page may be migrated from the faster memory to the slower memory and/or a victim page may be migrated from the slower memory to the faster memory. In some cases, data hotness may be a factor in selecting which data should be evicted as a victim page. In some cases, selecting a victim page may be based on a cache replacement policy such as a Least Recently Used (LRU) replacement policy. The LRU may maintain an LRU stack, which may be sorted by access recency. In some cases, the most recently accessed page may be placed at the top of the LRU stack, and the least recently accessed page may be placed at the bottom (or vice versa). When a page is referenced, the page may be removed from its position and moved to the top of the stack. With memory evictions, the LRU may select the least recently accessed page as the victim page.

A memory management unit (MMU) may be referred to as a paged memory management unit. The MMU can include a computer hardware unit (e.g., logical circuitry) that examines memory references on the memory bus. The MMU can translate these requests, referred to as virtual memory addresses, into physical addresses in main memory.

NUMA balancing scan can adversely affect system performance. NUMA balancing may require page fault, which can adversely affect system performance. NUMA balancing may consume CPU resource to scan virtual memory addresses, which can result in wasting CPU resources. Also, NUMA balancing does not guarantee the accuracy of a sequence of newest access according to the scanning range. NUMA can include a computer memory design that allows different processors to access different physical memory areas (nodes) at different times. NUMA can be used in symmetric multiprocessing (SMP) systems, where multiple processors work under a single operating system and access each other's memory over a common bus or interconnect path.

A memory tiering system (e.g., of the systems and methods described herein) may include hardware (e.g., physical memory devices), a kernel that may abstract the hardware into different tiers and/or operate on memory pages (e.g., multiple memory tiers, page migrator, page scanner), a user space (e.g., applications, tasks, policies, page promotion controller, page demotion controller), a cluster scheduler (e.g., scheduling hints, tier aware cluster scheduler). Inside the kernel, the system may use daemons (e.g., computer programs that run in the background without direct user interaction) to monitor memory accesses and/or to build the dataset that informs the promotion/demotion process. The user space may include a management daemon that makes demotion and promotion policies for memory between tier1 and tier2 (e.g., tier1 for higher performance, tier2 for lower performance), then conveys changes in policies to the kernel. The cluster scheduler may make decisions about where to run applications based on memory constraints and performance of the system.

The memory tiering system may be based on identifying cold data (e.g., infrequently accessed data, data accessed below an access threshold) and/or hot data (e.g., frequently accessed data, data accessed at or above an access threshold). Based on a threshold, a page may be classified as cold when the page has not been accessed in the prior t seconds. The memory tiering system may demote cold pages to a lower tier of memory (e.g., slower memory, lower cost memory), and/or may promote hot pages to a higher tier of memory (e.g., faster memory, higher cost memory). The policy of when to demote pages to cold memory may depend on the constraints of the application. An application's policy can be adaptive. For example, a kernel may provide a user space daemon a cold age histogram (e.g., frequency distribution of inter-access interval duration). The cold age histogram may indicate how many pages were not accessed for at least 2 minutes. The policy engine may use this information to identify application access patterns and adjust parameter values.

To promote pages (e.g., move pages) from tier2 to tier1, the tiered memory system may rely on one or more approaches, which may include at least one of proactive promotion or periodic scanning. Proactive promotion may move a page from tier2 to tier1 as soon as the page is likely to receive more accesses, rather than waiting until a surge of access occurs, which would introduce application latency. The proactive process may be informed by signals from hardware (e.g., a performance monitoring unit). The proactive process may be based on sampling last level cache miss events to identify insights into which data is actively being used. Periodic scanning can complement a sampling-based approach by scanning pages over repeating periods. and promoting the pages based on how many consecutive scan periods the page has been accessed in.

NUMA balancing scan can present several challenges, making it less desirable for memory tiering promotion in the context of software architecture. Issues associated with NUMA balancing scans can include the NUMA balancing scan, necessitating the occurrence of page faults, which can significantly impact performance by causing delays. NUMA balancing scanning can include searching the VMAs to determine which page is accessed, leading to the utilization of valuable CPU resources. This allocation of processing power to scan VMAs represents an overhead that could be more efficiently directed toward other critical tasks. The CPU resource wastage in scanning VMAs may lead to suboptimal system performance. NUMA balancing scanning does not guarantee a specific sequence of access according to the scanning range. This lack of predictability in access sequence can be problematic for memory tiering, especially when the order of access is crucial for optimizing the performance of the system. Unpredictable access sequences can result in suboptimal promotion decisions, impacting overall efficiency. The associated performance issues of NUMA balancing scanning, including resource wastage and unpredictable access sequences may conflict with the design goals of a memory tiering system. Optimal software architecture for memory tiering may prioritize efficiency, predictability, and minimal impact on overall system performance.

NUMA balancing scan may operate periodically, which can render one or more pages invisible, and which can induce page faults based on user access to slow-tier memory. In the event of a user accessing a page in the slow tier, the page's invisible status can prompt a page fault handler. The handler can allocate a new page in the top-tier memory. Subsequently, the victim page can be migrated from the slow tier to a top-tier memory. The virtual file system (VFS) may modify (e.g., update) the page mapping, and the pages in the slow-tier memory may be freed (e.g., released, deallocated, made available). Such procedures may consistently necessitate a page fault, which can result in computationally expensive overhead for a page access.

With synchronous (sync) promotion, NUMA balancing scan may not be designed for memory tiering. NUMA scanning overhead in the host (e.g., CPU) may be periodic for a given amount of memory, which may not cover all memory access. NUMA balancing scan can result in significant overheads with sync promotion, such as page fault overhead, page migration overhead, etc. For one cache line (CL) access (e.g., 64byte CL), overhead can include handling one page fault, searching LRU to find a victim to kick off from first tier, a 4KB copy from first tier to second tier, preparing one free-page in the first tier, a 4KB copy from second to first tier, and modifying (e.g., updating) the associated page table entry. With asynchronous (async) promotion, overhead may be less, but the same problems with NUMA balancing scan still exist.

Some memory tiering systems may be configured to determine which page is accessed by the CPU (e.g., host). But because the memory operation is done by the hardware, there is no way to intercept. If the CPU wants to access a memory address, there is no way for the CPU can determine the target address on the physical devices. When the slow-tier memory is accessed by the CPU, then the system may move this page to a memory tier (e.g., system memory) that is faster than the slow-tier memory. However, for such systems, there may be no way for the CPU to determine whether this page is on slow-tier memory or top-tier memory. Such systems may use NUMA balancing scan to overcome this issue. Accordingly, such systems may search VMA data structures to determine which page is accessed. Such systems may check every page in a VMA data structures to determine which page is accessed. To access the target memory address, the CPU checks whether the page is accessible or not.

In some cases, the CPU may determine whether the page is accessible in conjunction with a memory management unit (MMU). If the page is accessible, then the MMU can translate this address page to the CPU (e.g., translate virtual memory address to physical memory address). However, this page may be invisible or undiscoverable to the CPU. Therefore, some systems may make a memory exception that results in a page fault. When memory access happens on slow-tier memory, a page fault handler may be invoked by this memory exception. If the page is accessed by the slow-tier memory, then this page may be moved to a faster memory tier (e.g., top-tier memory, system memory).

Some aspects of the systems and methods described herein may be based on compute express link (CXL). CXL can be based on the PCIe bus. CXL can include an open standard interconnect that connects processors, accelerators, and memory expansion. CXL can use a family of protocols that run on PCIe buses, including CXL.io, CXL.cache, and CXL.mem. CXL.io allows non-volatile memory express (NVMe) for management and direct memory access (DMA). NVMe can include a storage protocol that runs on the PCIe bus. NVMe can include a communications interface and driver based on PCIe.

Numerous algorithms for CXL memory tiering exist. However, as described herein, their reliance on NUMA balancing scans for memory tiering promotion introduces limitations. The NUMA balancing scan, initially devised for the auto-NUMA scheme to mitigate access across CPU sockets in multi-socket systems, may be deemed suitable for memory-tiering applications in heterogeneous memory systems. However, NUMA balancing scan may pose potential constraints with respect to performance and software architecture design. The systems and methods described herein provide a promotion scheme that avoids NUMA balancing scans.

The systems and methods provide reduced latency promotion in memory tiering. The systems and methods may be facilitated by a CXL device capability hint. The systems and methods may be based on access log information obtained from the CXL device. The CXL device capability can enable the systems and methods to perform memory tiering operations based on access log information. The systems and methods may include gathering the configuration of various settings via the access log. In some cases, information in the access log may be transmitted through a CXL mailbox interface.

Based on the access log, a device driver (e.g., CXL device driver) may perform address translation from device physical address (DPA) to a host physical address (HPA). In some cases, the device driver may obtain the DPA from the access log of the CXL device. The systems and methods may include updating a least recently used (LRU) queue (e.g., LRU cache based on LRU algorithm) based on a counter value. The LRU may be an active LRU. In some cases, the device driver may obtain the counter value from the access log of the CXL device. The systems and methods may include determining whether a top-tier memory (e.g., faster memory tier) has a sufficient number of available slots. If it is determined (e.g., by the host, by the device, etc.) that the top-tier memory has a sufficient number of available slots, a victim may be selected from the LRU, and the identified page in a slow tier (e.g., slower memory tier) may be migrated to the top-tier memory. In some cases, a virtual file system (VFS) may be updated with the revised page mapping indicating the current location of the page in the top-tier, which was previously in the slow tier. The systems and methods may include freeing the page (e.g., making the page available) in the slow tier. For example, a status of one or more slots associated with the page that was moved from the slow tier to the top-tier may be updated to unreserved, indicating that one or more slots are available to accept data.

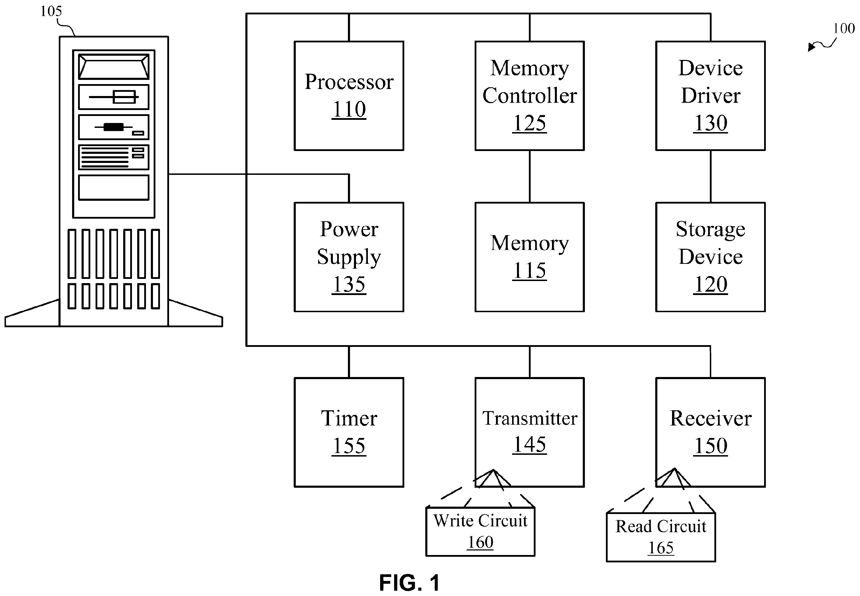

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe) interface, or a Compute Express Link (CXL) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115.

Machine 105 may include power supply 135. Power supply 135 may provide power to machine 105 and its components. Machine 105 may include transmitter 145 and receiver 150. Transmitter 145 or receiver 150 may be respectively used to transmit or receive data (e.g., memory promotion, memory demotion, obtaining information from an access log, etc.). In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120. In the illustrated example, machine 105 may include timer 155. In some cases, timer 155 may be used to time how long data has been a given memory tier, how long data remains in a given memory tier since its last access, etc.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, memory controller 125 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), GPUs, NPUs, TPUs, OPUs, and/or the like, executing instructions stored in any type of memory. In some embodiments, one or more components of memory controller 125 may be implemented as an SoC.

In some examples, memory controller 125 may include any one or combination of logic (e.g., logical circuit), hardware (e.g., processing unit, memory, storage), software, firmware, and the like. In some cases, memory controller 125 may perform one or more functions in conjunction with processor 110. In some cases, at least a portion of memory controller 125 may be implemented in or by processor 110 and/or memory 115. The one or more logic circuits of memory controller 125 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable memory controller 125 to provide systems and methods for reducing latency of memory tiering devices (e.g., based on CXL).

In some examples, memory controller 125 may provide reducing latency of memory tiering devices (e.g., based on compute express link (CXL)). In one or more examples, memory controller 125 may determine whether a top-tier memory (e.g., faster memory tier) includes available slots. In some cases, memory controller 125 may check a watermark of the top-tier to determine whether the top-tier has available slots. In some examples, memory controller 125 may determine whether a number of available slots satisfies a threshold (e.g., watermark threshold, one or more slots that are determined to be greater than the threshold, or greater or equal to the threshold).

When memory controller 125 determines that the top-tier memory includes at least one available slot (e.g., has a sufficient number of available slots), memory controller 125 may select a victim based on a counter value of a page. In some cases, each page in tier of memory may be associated with a count that indicates a number of accesses to a given page in a given period of time. Based on these counts, the LRU may indicate which page is the least recently used page.

When it is determined the top-tier includes number of available slots (e.g., a sufficient number of available slots), memory controller 125 may obtain a device physical address (DPA) from the access log of the CXL device and perform address translation from the DPA to a host physical address (HPA). In some cases, memory controller 125 may obtain a counter value from the access log of the CXL device and may update an LRU based on the counter value. In some cases, memory controller 125 may migrate the identified page in a slow tier (e.g., slower memory tier) to the top-tier memory.

In some cases, a virtual file system (VFS) may be updated (e.g., by memory controller 125) with the revised page mapping indicating the current location of the page in the top-tier, which was migrated from the slow tier to the top-tier. In some cases, memory controller 125 may free the page in the slow tier. For example, memory controller 125 may update a status of one or more slots associated with the page that was moved from the slow tier to the top-tier (e.g., update status from reserved to unreserved), indicating that one or more slots are available to accept data based on the page being migrated to the top-tier.

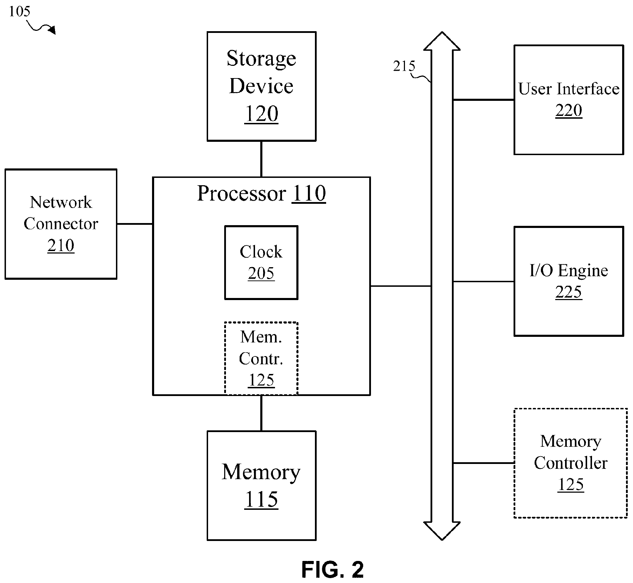

**FIG. 2** illustrates details of machine 105 of FIG. 1, according to examples described herein. In the illustrated example, machine 105 may include one or more processors 110, which may include memory controllers 125 and clocks 205, which may be used to coordinate the operations of the components of the machine. Processors 110 may be coupled to memories 115, which may include random access memory (RAM), read-only memory (ROM), or other state preserving media, as examples. Processors 110 may be coupled to storage devices 120, and to network connector 210, which may be, for example, an Ethernet connector or a wireless connector. Processors 110 may be connected to buses 215, to which may be attached user interfaces 220 and Input/Output (I/O) interface ports that may be managed using I/O engines 225, among other components. As shown, processors 110 may be coupled to memory controller 125. Additionally, or alternatively, processors 110 may be connected to buses 215, to which may be attached memory controller 125.

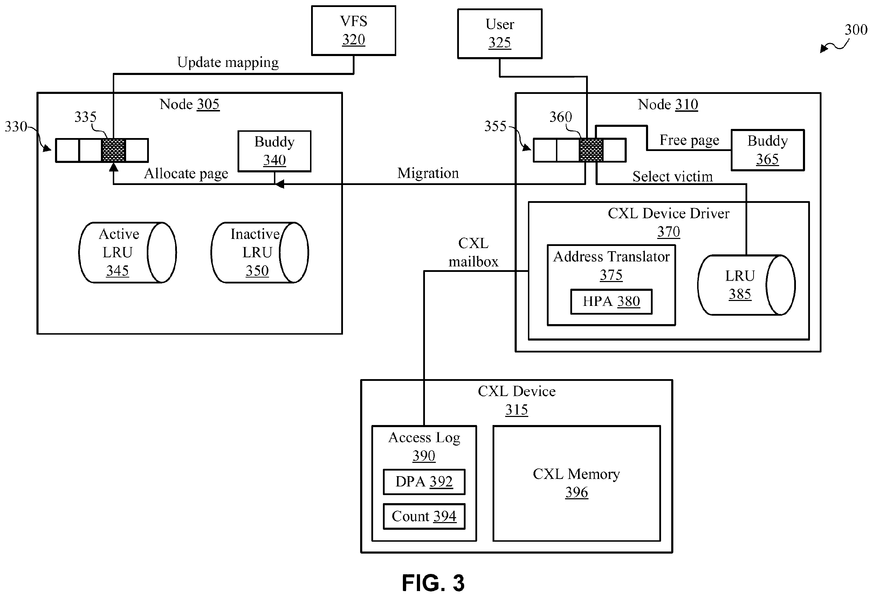

**FIG. 3** illustrates an example system 300 in accordance with one or more implementations as described herein. In some cases, system 300 may include a memory tiering system. In some cases, system 300 may provide low latency (e.g., relatively low latency, nearly zero latency, zero latency, etc.) memory tiering based on compute express link (CXL). CXL can include an interconnect that provides low-latency links between components (e.g., between memory, accelerators, processors, etc.). CXL may be based on the serial peripheral component interconnect express (PCIe) physical and electrical interface (e.g., for high performance data center computers)

In the illustrated example, system 300 may include node 305, node 310, CXL device 315, and virtual file system (VFS) 320. As shown, a user (e.g., user 325) may be associated with system 300. In some cases, node 305, node 310, and/or CXL device 315 may include logic (e.g., logical circuit), hardware (e.g., processing unit, microprocessor, FPGA, memory, storage), software, firmware, and the like to perform one or more functions of the systems and methods described herein.

In some examples, node 305 may include memory tier 330 (e.g., a first memory tier of system 300) that includes page 335, buddy 340, active LRU 345, and inactive LRU 350. In some examples, node 310 may include memory tier 355 (e.g., a second memory tier of system 300) that includes page 360, buddy 365, and CXL device driver 370. As shown, CXL device driver 370 includes address translator 375 holding host physical address (HPA) 380, and LRU 385. In some examples, CXL device 315 includes access log 390 holding device physical address (DPA) 392 and count 394, and CXL memory 396.

In some cases, memory tiering can include maintaining data in various memory tiers based on access frequency, etc. In some cases, memory tiering can include searching memory tiers (e.g., searching 100 MB every 30 seconds, searching 1 GB every 60 seconds, searching 10 GB every 90 seconds, etc.) to determine which data to promote, which data to demote, etc. The degree to which CPU resources are consumed depends on which option is used. In some cases, this searching is not accurate. However, by storing access information in an access log (e.g., access log 390) consumption of CPU resources may be minimized.

As shown in FIG. 3, memory of system 300 can have multiple layers of memory (e.g., memory tier 330, memory tier 355). In some cases, a top-tier memory (e.g., memory tier 330) can be located on or be part of system memory. In some cases, a slow-tier memory (e.g., memory tier 355) can be located on or be part of a slower memory (e.g., CXL memory). When data is copied from top-tier memory to slow-tier memory and there is no pre-page in the top-tier, some applications may be adversely affected due to a lack of sufficient memory. In some cases, some number of pre-pages may be maintained in a layer of memory (e.g., in each tier of memory). A watermark can be a threshold associated with the number of pre-pages that are maintained in a given layer of memory in order to maintain system reliability (e.g., to avoid insufficient memory).

When a device (e.g., CXL device 315) stores an access log (e.g., access log 390), this information can be messaged to a device drive layer (e.g., CXL device driver 370) via CXL mailbox. Based on the information from access log, the device driver can choose which pages to promote to a given memory tier (e.g., memory tier 330), and thus avoid the overheads of NUMA balancing scan. Accordingly, the systems and methods avoid wasting CPU resources, which increases memory tiering system performance.

In some cases, access log 390 may be stored in CXL memory 396. In some cases, information in access log 390 may be ordered by a timestamp and/or by an access counter (e.g., count 394, a counter for each page that increments respectively with each access of a given page). The information in access log 390 may be accessed by CXL mailbox when CXL device driver 370 is probing the target device. The CXL mailbox may include an interface to firmware of the CXL device 315. The CXL mailbox may enable communicative access (e.g., read data, transfer data, write data, etc.) to access log 390. Accordingly, CXL device driver 370 can get this information and can translate the device physical address (e.g., DPA 392) to a host physical address (e.g., HPA 380). In some cases, device firmware (e.g., firmware of CXL device 315) may be configured to maintain access log 390. In some cases, a host layer (e.g., CPU, node 310) may request information from access log 390 based a triggering event (e.g., access of a page of memory tier 355), thus reducing consumption of CPU resources.

One or more components of system 300 may be at least partially incorporated in memory controller 125 of FIG. 1 and/or FIG. 2. One or more operations of system 300 may be performed in conjunction with memory controller 125 of FIG. 1 and/or FIG. 2. In some examples, memory controller 125 may be implemented at least partially in at least one component of system 300 (e.g., node 305, node 310, and/or CXL device 315). Additionally, or alternatively, memory controller 125 may be implemented at least partially in at least one of or any combination of components of node 305, node 310, and/or CXL device 315.

In some examples, user 325 may include at least one of a user device, a user application, a user of the user device and/or user application, a tenant of a multi-tenant system, etc. In some cases, a task initiated by a user (e.g., user 325) or an application used by the user may access a page of memory tier 355. Based on the access, an access counter may be updated. It is noted that buddy 340 and/or buddy 365 may be part of a buddy memory allocation system. Buddy 340 and/or buddy 365 may include a buddy allocator to provide relatively fast allocation and merging by restraining objects to be of a size to the power of two. Buddy 340 and/or buddy 365 may include a memory management algorithm that divides memory (e.g., memory tier 330 and/or memory tier 355) into fixed-size blocks of powers of two to meet memory requests. Buddy 340 and/or buddy 365 may consider each block a buddy to another block of the same size. In some cases, when a process requests memory, buddy 340 and/or buddy 365 may determine the smallest available block that can accommodate the request, and may split larger blocks into two buddies if available. In some cases, the process may continue until the desired size is achieved.

In some examples, system 300 (e.g., node 305, node 310, and/or CXL device driver 370) may check a watermark in memory tier 330 to determine whether a sufficient number of free pages are available in memory tier 330. When the watermark condition is met (e.g., number of free pages satisfies a watermark threshold), information from access log 390 may be transferred to CXL device driver 370. In some cases, the information from access log 390 may be transferred based on a CXL mailbox (e.g., a data communication interface that interfaces with firmware of CXL device 315). In some examples, the information from access log 390 may include device physical address (DPA) 392 and/or count 394. In CXL device driver 370, address translation from DPA 392 to HPA 380 may be performed by address translator 375. As shown, CXL device driver 370 may maintain a data structure LRU with a counter (e.g., LRU 385). In some cases, LRU 385 may be updated based on counter 394. In some cases, counter 394 may reflect an access of a page of memory tier 355 (e.g., page 360) by user 325.

In some cases, page 360 of memory tier 355 may be identified based on user 325 access of data in memory tier 355. In some cases, the page 360 of memory tier 355 may be selected based on DPA 392 being translated to HPA 380, indicating page 360 as the page being accessed. When it is determined that memory tier 330 has adequate free pages (e.g., based on checking the watermark), a victim page of memory tier 330 (e.g., page 335) may be selected (e.g., by node 305 and/or CXL device driver 370). In some cases, the victim page of memory tier 330 may be selected based on LRU 385 (e.g., based on LRU 385 being updated based on counter 394). For example, page 360 may be selected for memory promotion. In some cases, the victim page of memory tier 330 (e.g., page 335) may be selected based on page table entries of active LRU 345. In some cases, the page table entries of active LRU 345 may indicate page 335 is the least recently used page in memory tier 330. Accordingly, page 335 may be selected (e.g., by node 305 and/or CXL device driver 370) for memory demotion.

In some examples, buddy 340 may allocate memory space (e.g., reserve one or more slots) in memory tier 330 for the memory promotion of page 360. In some cases, based on the memory promotion of page 360, page 360 may be migrated from memory tier 355 to memory tier 330 to the allocated memory space of memory tier 330 reserved by buddy 340. Based on the memory promotion, the page mapping of pages in memory tier 330 may be updated. For example, node 305 may update a page mapping of memory tier 330 in VFS 320. Accordingly, the systems and methods described herein enable the freeing of the page in a memory tier. Based on the systems and methods, when a user accesses a page in a memory tier, no page fault or scanning overhead is incurred.

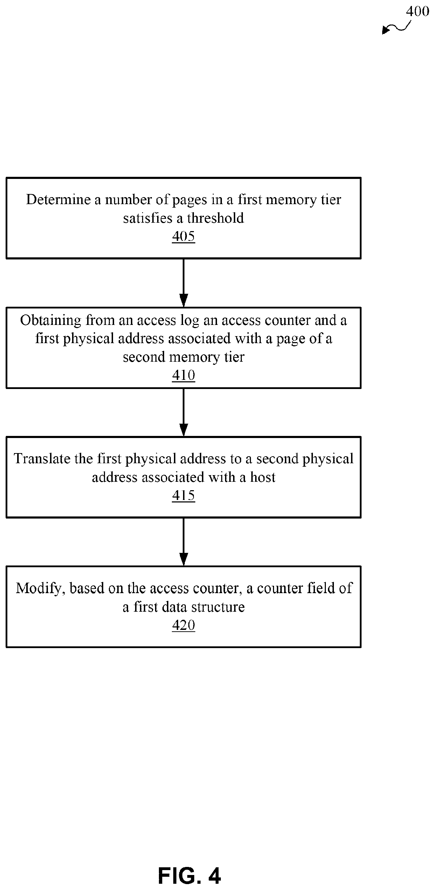

**FIG. 4** depicts a flow diagram illustrating an example method 400 associated with the disclosed systems, in accordance with example implementations described herein. In some configurations, method 400 may be implemented by memory controller 125 of FIG. 1, memory controller 125 of FIG. 2, and/or one or more components of system 300 depicted in FIG. 3. In some configurations, method 400 may be implemented in conjunction with machine 105, components of machine 105, or any combination thereof. The depicted method 400 is just one implementation and one or more operations of method 400 may be rearranged, reordered, omitted, and/or otherwise modified such that other implementations are possible and contemplated.

At 405, method 400 may include determining a number of pages in a first memory tier satisfies a threshold. For example, CXL device driver 370 may determine whether a number of unreserved pages in a first memory tier (e.g., memory tier 330) satisfies a threshold.

At 410, method 400 may include obtaining from an access log an access counter and a first physical address associated with a page of a second memory tier. For example, based on the number of unreserved pages in the first memory tier satisfying the threshold, CXL device driver 370 may obtain, from an access log, an access counter and a first physical address (e.g., device physical address) associated with a page of a second memory tier (e.g., memory tier 355).

At 415, method 400 may include translating the first physical address to a second physical address associated with a host. For example, address translator 375 of CXL device driver 370 may translate the first physical address to a second physical address associated with a host.

At 420, method 400 may include modifying, based on the access counter, a counter field of a first data structure. For example, CXL device driver 370 may update, based on the access counter, a counter field of a first data structure (e.g., LRU 385).

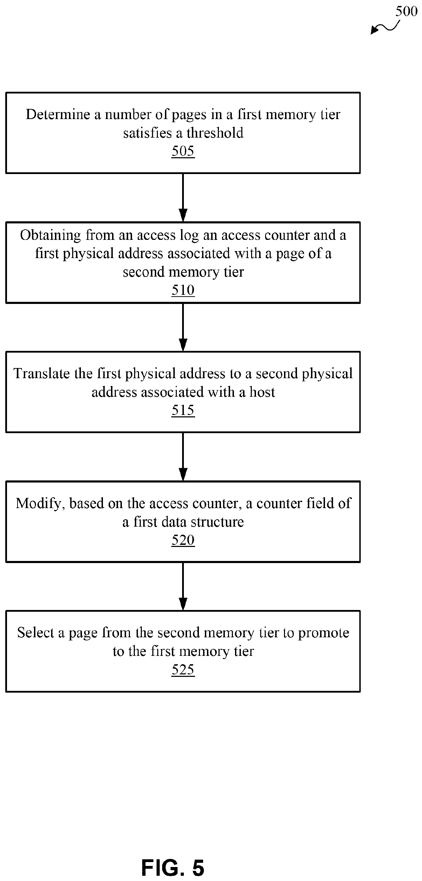

**FIG. 5** depicts a flow diagram illustrating an example method 500 associated with the disclosed systems, in accordance with example implementations described herein. In some configurations, method 500 may be implemented by memory controller 125 of FIG. 1, memory controller 125 of FIG. 2, and/or one or more components of system 300 depicted in FIG. 3. In some configurations, method 500 may be implemented in conjunction with machine 105, components of machine 105, or any combination thereof. The depicted method 500 is just one implementation and one or more operations of method 500 may be rearranged, reordered, omitted, and/or otherwise modified such that other implementations are possible and contemplated.

At 505, method 500 may include determining a number of pages in a first memory tier satisfies a threshold. For example, CXL device driver 370 may determine whether a number of unreserved pages in a first memory tier (e.g., memory tier 330) satisfies a threshold.

At 510, method 500 may include obtaining from an access log an access counter and a first physical address associated with a page of a second memory tier. For example, based on the number of unreserved pages in the first memory tier satisfying the threshold, CXL device driver 370 may obtain, from an access log, an access counter and a first physical address (e.g., device physical address) associated with a page of a second memory tier (e.g., memory tier 355).

At 515, method 500 may include translating the first physical address to a second physical address associated with a host. For example, address translator 375 of CXL device driver 370 may translate the first physical address to a second physical address associated with a host.

At 520, method 500 may include modifying, based on the access counter, a counter field of a first data structure. For example, CXL device driver 370 may update, based on the access counter, a counter field of a first data structure (e.g., LRU 385).

At 525, method 500 may include selecting a page from the second memory tier to promote to the first memory tier. For example, based on the number of unreserved pages in the first memory tier satisfying the threshold and based on updating the counter field of the first data structure, CXL device driver 370 may select a page from the second memory tier to promote to the first memory tier.

The systems and methods described herein (e.g., machine 105 of FIGs. 1 and/or 2, system 300 of FIG. 3, method 400 of FIG. 4, method 500 of FIG. 5) may include logic to provide reducing latency of memory tiering devices based on CXL. The logic may include any combination of hardware (e.g., at least one memory, at least one processor), logical circuitry, firmware, and/or software to provide reducing latency of memory tiering devices based on CXL. The systems and methods of reduced latency promotion in memory tiering may include access log information derived from a CXL device. The CXL device capability can enable the configuration of various settings to gather access log information, which can be subsequently transmitted through the CXL mailbox interface. The systems and methods may include utilizing the access log, where a device driver may be configured to perform address translation from device physical address (DPA) to host physical address (HPA). The active least recently used (LRU) list may be updated with a counter. When the top-tier memory has sufficient available slots, a victim may be selected from the LRU, and the identified page in the slow tier may be migrated to the top-tier memory. The virtual file system (VFS) may then be updated with the revised page mapping. Accordingly, the pages in the slow tier are freed. Accordingly, based on the systems and methods, when a user accesses a page in a memory tier, no page fault or scanning overhead is incurred.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as 'communicating', when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

## Claims

1. A method (400, 500) of memory tiering comprising:
determining (405, 505) a number of pages (335) in a first memory tier (330) satisfies a threshold;
based on the number of pages (335) in the first memory tier (330) satisfying the threshold, obtaining (410, 510) from an access log (390) an access counter (394) and a first physical address (DPA, 392) associated with a page (360) of a second memory tier (355);
translating (415, 515) the first physical address (DPA, 392) to a second physical address (HPA, 380) associated with a host; and
modifying (420, 520), based on the access counter (394), a counter field of a first data structure (385).

2. The method (400, 500) of claim 1, based on the number of pages (335) in the first memory tier (330) satisfying the threshold and based on modifying the counter field of the first data structure (385), further comprising selecting (525) a page (360) from the second memory tier (355) to move to the first memory tier (330).

3. The method (400, 500) of claim 1 or 2, based on the number of pages (335) in the first memory tier (330) satisfying the threshold and based on a counter field of a second data structure (345), further comprising selecting (525) a page from the first memory tier (330) to demote to the second memory tier (355), wherein the first data structure (385) is associated with the second memory tier (355) and the second data structure (345) is associated with the first memory tier (330).

4. The method (400, 500) of any one of claims 1 to 3, further comprising reserving an allo0063ation of the first memory tier (330) for storage of the page (360) of the second memory tier (355), wherein the first memory tier (330) has a lower latency than the second memory tier (355).

5. The method (400, 500) of claim 4, further comprising:
migrating the page of the second memory tier (355) to the allocation of the first memory tier (330);
modifying a page mapping of the first memory tier (330) based on migrating the page (360) of the second memory tier (355) to the allocation of the first memory tier (330); and
making the page (360) from the second memory tier (355) available based on migrating the page (360) of the second memory tier (355) to the allocation of the first memory tier (330).

6. The method (400, 500) of any one of claims 1 to 5, wherein the access log (390) is associated with a cache-based protocol device (315).

7. The method (400, 500) of claim 6, wherein the access counter (394) and the first physical address (DPA, 392) are obtained via an interface to firmware of the cache-based protocol device (315).

8. The method (400, 500) of any one of claims 1 to 7, wherein the counter field corresponds to a page table entry of the page (360) of the second memory tier (355).

9. The method (400, 500) of any one of claims 1 to 8, wherein the first data structure (385) is associated with a cache-based protocol device driver (370).

10. A device (100) comprising:
at least one memory (115); and
at least one processor (110) coupled with the at least one memory configured to perform the method (400, 500) or steps of the method (400, 500) according to any one of claims 1 to 9.

11. A non-transitory computer-readable medium storing code that comprises instructions executable by a processor (110) to perform the method (400, 500) or steps of the method (400, 500) according to any one of claims 1 to 9.

## Amended claims

### Amended claims in accordance with Rule 137(2) EPC.

1. A method (400, 500) of memory tiering comprising:
determining (405, 505) a number of pages (335) in a first memory tier (330) satisfies a threshold;
based on the number of pages (335) in the first memory tier (330) satisfying the threshold, obtaining (410, 510) from an access log (390) an access counter (394) and a first physical address (DPA, 392) associated with a page (360) of a second memory tier (355);
translating (415, 515) the first physical address (DPA, 392) to a second physical address (HPA, 380) associated with a host;
modifying (420, 520), based on the access counter (394), a counter field of a first data structure (385); and
based on the number of pages (335) in the first memory tier (330) satisfying the threshold and based on modifying the counter field of the first data structure (385), further comprising selecting (525) the page (360) from the second memory tier (355) to proactively promote to the first memory tier (330).

2. The method (400, 500) of claim 1, based on the number of pages (335) in the first memory tier (330) satisfying the threshold and based on a counter field of a second data structure (345), further comprising selecting (525) a page from the first memory tier (330) to demote to the second memory tier (355), wherein the first data structure (385) is associated with the second memory tier (355) and the second data structure (345) is associated with the first memory tier (330).

3. The method (400, 500) of claim 1 or 2, further comprising reserving an allocation of the first memory tier (330) for storage of the page (360) of the second memory tier (355), wherein the first memory tier (330) has a lower latency than the second memory tier (355).

4. The method (400, 500) of claim 3, further comprising:
migrating the page of the second memory tier (355) to the allocation of the first memory tier (330);
modifying a page mapping of the first memory tier (330) based on migrating the page (360) of the second memory tier (355) to the allocation of the first memory tier (330); and
making the page (360) from the second memory tier (355) available based on migrating the page (360) of the second memory tier (355) to the allocation of the first memory tier (330).

5. The method (400, 500) of any one of claims 1 to 4, wherein the access log (390) is associated with a cache-based protocol device (315).

6. The method (400, 500) of claim 5, wherein the access counter (394) and the first physical address (DPA, 392) are obtained via an interface to firmware of the cache-based protocol device (315).

7. The method (400, 500) of any one of claims 1 to 6, wherein the counter field corresponds to a page table entry of the page (360) of the second memory tier (355).

8. The method (400, 500) of any one of claims 1 to 7, wherein the first data structure (385) is associated with a cache-based protocol device driver (370).

9. A device (100) comprising:
at least one memory (115); and
at least one processor (110) coupled with the at least one memory configured to perform the method (400, 500) or steps of the method (400, 500) according to any one of claims 1 to 8.

10. A non-transitory computer-readable medium storing code that comprises instructions executable by a processor (110) to perform the method (400, 500) or steps of the method (400, 500) according to any one of claims 1 to 8.
